# EUROPEAN PATENT APPLICATION

(11) **EP 4 773 223 A1**
(43) Date of publication of application: **08.07.2026**
(21) Application number: 24860269.0
(22) Date of filing: 13.08.2024
(51) Int. Cl.: H01M 4/36, H01M 4/525, H01M 4/505, H01M 4/62, H01M 4/131, H01M 10/052, C01G 53/00, H01M 4/02

(54) **CATHODE ACTIVE MATERIAL FOR LITHIUM SECONDARY BATTERY, METHOD FOR MANUFACTURING SAME AND LITHIUM SECONDARY BATTERY COMPRISING SAME**

(30) Priority: 29.08.2023 KR 20230113483
(71) Applicant: Posco Future M Co., Ltd., Pohang-si, Gyeongsangbuk-do 37918 (KR)
(72) Inventor: LIM, Seokjae, Pohang-si, Gyeongsangbuk-do 37918 (KR); PARK, Jeonghyeon, Pohang-si, Gyeongsangbuk-do 37918 (KR); SEO, Sunghwa, Pohang-si, Gyeongsangbuk-do 37918 (KR); KIM, Jaehan, Pohang-si, Gyeongsangbuk-do 37918 (KR); CHOI, Kwonyoung, Pohang-si, Gyeongsangbuk-do 37918 (KR)
(74) Representative: Meissner Bolte Partnerschaft mbB
(86) International application number: PCT/KR2024/012087
(87) International publication number: WO 2025/048348

(57) **Abstract**

The positive electrode active material for a lithium secondary battery according to the present invention includes a lithium metal oxide in a single-particle form and a coating layer located on a surface of the lithium metal oxide, and the coating layer may include Al and W.

## Description

### [Technical Field]

The present invention relates to a positive electrode active material for a lithium secondary battery, a method for manufacturing the same, and a lithium secondary battery including the same.

### [Background Art]

Recently, driven by the explosive demand for electric vehicles and the increasing need for longer driving ranges, the development of secondary batteries having high capacity and high energy density has been actively pursued worldwide.

As a solution to satisfy these demands, technologies employing high-nickel NCM (nickel-cobalt-manganese) positive electrode active materials have been proposed. In addition, in order to improve the electrode plate density of the cell components, the positive electrode active material must be configured in a bimodal form in which large particles and small particles are blended at a certain ratio.

However, when a positive electrode active material is configured in the form of secondary particles in which primary particles of several tens of nanometers to several micrometers are agglomerated, the powder exhibits a large specific surface area, resulting in a wide contact area with the electrolyte, which increases the likelihood of gas generation and causes degradation in lifespan characteristics.

To address this issue, an approach has been proposed in which, instead of multi-particle structures formed by agglomeration of primary particles, the positive electrode active material is manufactured in a single-particle form in which the size of the primary particles is increased as much as possible. Specifically, approaches have been presented in which the size of the primary particles is increased using a sintering agent or flux. However, such approaches produce a rocksalt structure on the particle surface, resulting in deterioration of the electrochemical performance of the positive electrode active material.

Accordingly, there is a need for a positive electrode active material capable of increasing the size of the primary particles to reduce the specific surface area and increasing particle strength, thereby solving the lifespan-degradation issues observed in high-nickel NCM-based positive electrode active materials.

### [Detailed Description of the Invention]

### [Technical Problem]

The present invention aims to provide a positive electrode active material for a lithium secondary battery that has a single-particle form and exhibits improved discharge capacity and high-temperature lifespan.

The present invention also aims to provide a lithium secondary battery exhibiting improved discharge capacity and high-temperature lifespan.

### [Technical Solution]

According to one embodiment of the present invention, a positive electrode active material for a lithium secondary battery may include a lithium metal oxide in a single-particle form and a coating layer located on a surface of the lithium metal oxide.

The coating layer may include Al and W, and a content ratio (W/Al) of W to Al may be 1.5 or less, excluding 0, and the content ratio (W/Al) of W to Al may be 1.0 or less, excluding 0.

Contents of each coating element included in the coating layer may be 2,000 ppm or less, excluding 0 ppm, and contents of each coating element included in the coating layer may be 1,500 ppm or less, excluding 0 ppm.

The lithium metal oxide may not exhibit a titration equivalence point within a pH range of 6.5 to 9.0 when neutralization titration is detected using a potentiometric titrator.

The lithium metal oxide may comprise 50 to 70 mol% nickel based on the total moles of transition metals.

A method for manufacturing a positive electrode active material for a lithium secondary battery according to one embodiment of the present invention may include: preparing a transition metal precursor comprising 50 to 70 mol% nickel based on the total moles of transition metals; mixing the transition metal precursor with a lithium raw material and performing calcination to obtain a lithium metal oxide; deagglomerating the lithium metal oxide to obtain a lithium metal oxide in a single-particle form; and mixing the lithium metal oxide in a single-particle form with a coating raw material and performing heat treatment to obtain a lithium metal oxide having a coating layer formed thereon.

The coating raw material may include two or more selected from Al, W, Co, V, Ti, Nb, Ce, B, and P.

In the step of mixing the lithium metal oxide in a single-particle form with the coating raw material and performing heat treatment to obtain the lithium metal oxide having the coating layer formed thereon, the heat treatment may be performed at a temperature of 350 to 450°C.

In the step of mixing the transition metal precursor with the lithium raw material and performing calcination to obtain the lithium metal oxide, the calcination may be performed at a temperature of 900 to 960°C.

After the step of mixing the lithium metal oxide in a single-particle form with the coating raw material and performing heat treatment to obtain the lithium metal oxide having the coating layer formed thereon, the method may further include deagglomerating the obtained lithium metal oxide.

Another embodiment of the present invention may provide a positive electrode for a lithium secondary battery including the positive electrode active material described above.

Another embodiment of the present invention may provide a lithium secondary battery including the positive electrode described above.

### [Effects of the Invention]

The positive electrode active material for a lithium secondary battery according to the present invention has a single-particle form while exhibiting improved discharge capacity in batteries to which it is applied, thereby providing excellent electrochemical performance.

The positive electrode active material for a lithium secondary battery according to the present invention has a single-particle form while exhibiting improved high-temperature lifespan in batteries to which it is applied, thereby providing excellent electrochemical performance.

In addition, the lithium secondary battery according to the present invention exhibits improved discharge capacity and high-temperature lifespan, thereby providing excellent electrochemical performance.

### [Mode for Carrying Out the Invention]

The terms "first," "second," and "third," and the like used in the present specification are used to describe various parts, components, regions, layers, and/or sections, but are not limited thereto. These terms are merely used to distinguish one part, component, region, layer, or section from another. Therefore, the first part, component, region, layer, or section described below may be referred to as the second part, component, region, layer, or section within the scope of the present invention.

Technical terminology used herein is intended only to describe specific embodiments and is not intended to limit the present invention. Singular terms used herein include the plural form unless the context clearly indicates otherwise. The term "comprising/including/containing" as used in the specification specifies the presence of stated features, regions, integers, steps, operations, elements, and/or components, but does not exclude the presence or addition of other features, regions, integers, steps, operations, elements, and/or components.

When a portion is described as being "on" or "over/above" another portion, it may be directly on or over the other portion, or other portions may be interposed therebetween. In contrast, when a portion is described as being "directly on/above" another portion, no other portion is interposed therebetween.

Unless otherwise defined, all terms including technical and scientific terms used herein have the same meaning as commonly understood by one of ordinary skill in the art to which the present invention pertains. Terms defined in commonly used dictionaries are to be interpreted as having meanings consistent with their use in the relevant technical literature and the present disclosure, and are not to be interpreted in an idealized or overly formal sense unless explicitly defined otherwise.

In the present specification, the expression "combinations thereof" described in Markush-type expressions refers to mixtures or combinations of one or more components selected from the group consisting of the elements of the Markush group and indicates inclusion of any one or more selected from the group.

Hereinafter, embodiments of the present invention will be described in detail so that those skilled in the art may readily carry out the invention. However, the present invention may be embodied in various different forms and is not limited to the embodiments described herein.

### <Positive Electrode Active Material for a Lithium Secondary Battery>

A positive electrode active material for a lithium secondary battery according to an embodiment of the present invention includes a lithium metal oxide in a single-particle form. The single-particle-type active material has a smaller specific surface area than conventional secondary particles, thereby reducing the amount of gas generated due to side reactions with the electrolyte, increasing particle strength so as to suppress particle breakage during rolling, and reducing the occurrence of cracks caused by repeated charging and discharging. Accordingly, compared to secondary particles, the single-particle structure provides advantages such as excellent lifespan and safety characteristics and the ability to achieve high energy density in the electrode.

In the present specification, the term "single particle" is used to distinguish from the conventional secondary-particle-type positive electrode active material particles formed by agglomeration of several tens to several hundreds of primary particles, and refers to a concept that includes a single particle composed of one primary particle and an agglomerate particle composed of 30 or fewer primary particles. In addition, "secondary particles" refer to aggregates of several tens to several hundreds of primary particles that are agglomerated through physical or chemical bonding between the primary particles without an intentional agglomeration or assembly process.

A positive electrode active material for a lithium secondary battery according to an embodiment of the present invention may include a lithium metal oxide in a single-particle form and a coating layer located on a surface of the lithium metal oxide.

The positive electrode active material for a lithium secondary battery according to the present invention may include two or more coating elements on its surface, and the coating elements may include two or more selected from Al, W, Co, V, Ti, Nb, Ce, B, and P.

By providing a coating layer including two or more coating elements as described above, the discharge/charge capacity of the battery can be improved, and higher electrochemical stability, electrolyte resistance, and capacity retention may be obtained.

Contents of each coating element included in the coating layer may be 2,500 ppm or less, specifically 2,000 ppm or less, more specifically 1,500 ppm or less, and even more specifically 1,400 ppm or less.

When the content of the coating elements included in the coating layer satisfies the above range, discharge capacity and high-temperature lifespan can be improved simultaneously. When below the minimum content, the discharge capacity improvement effect is insignificant, and when above the upper limit, the high-temperature lifespan improvement effect becomes insignificant.

Meanwhile, the coating layer may include Al and W. A content ratio (W/Al) of W to Al may be less than 2.0, specifically 1.5 or less, excluding 0, and more specifically 1.0 or less, excluding 0.

When the value of the content ratio (W/Al) satisfies the above range, both discharge capacity improvement and high-temperature lifespan improvement may be achieved. When the content ratio exceeds the above range, formation of unstable LiWOₓ at the interface may occur, which deteriorates the high-temperature lifespan improvement effect.

The positive electrode active material for a lithium secondary battery according to the present invention may not exhibit a titration equivalence point within a pH range of 6.5 to 9.0 when neutralization titration is detected using a potentiometric titrator. Specifically, an equivalence point may be detected only at pH values of 9.0 or higher or at pH values below 6.5. More specifically, the equivalence point may not be detected within a pH range of 6.5 to 8.5.

From this, it can be inferred that most of the residual lithium (Li) present on the surface of the positive electrode active material according to the present invention exists in the form of LiOH or Li₂CO₃.

Meanwhile, the lithium metal oxide according to an embodiment of the present invention contains 50 to 70 mol% nickel based on the total moles of transition metals. In conventional NCM (nickel-cobalt-manganese ternary) positive electrode active materials, an increase in nickel content was used to increase cell capacity. However, if the nickel content is too high, thermal propagation issues may arise, causing thermal safety problems, and manufacturing costs may increase because nickel is expensive. Accordingly, the lithium metal oxide according to the present invention has its nickel content controlled within the above range to secure appropriate capacity and thermal safety characteristics while also achieving cost-effectiveness.

However, in order to manufacture a lithium metal oxide in a single-particle form, a higher calcination temperature is required compared to the secondary-particle process, which inherently causes drawbacks in capacity characteristics relative to secondary particles.

The lithium metal oxide may be more specifically represented by the following Chemical Formula 1.

[Chemical Formula 1] Liₐ[NiₓCo_{γ}Mn*z*M_{1w₁}M_{2w₂}]O₂

In Chemical Formula 1, 0.8 ≤ a ≤ 1.2, 0.5 ≤ x ≤ 0.7, 0 ≤ y ≤ 0.2, 0 ≤ z ≤ 0.4, 0 < w₁ ≤ 0.03, 0 < w₂ < 0.03, and x + y + z + w₁ + w₂ = 1, and M₁ and M₂ are different elements, and M₁ and M₂ may each independently include one or more selected from Al, W, Co, V, Ti, Nb, Ce, B, and P.

In the lithium metal oxide of Chemical Formula 1, lithium may be included in an amount corresponding to a, i.e., 0.8 ≤ a ≤ 1.2. If a is too small, capacity may decrease; if a is too large, the strength of the calcined positive electrode active material may increase, making pulverization difficult, and gas generation may increase due to an increase in lithium by-products. Considering the improvement effect on capacity characteristics due to lithium content control and the balance of sinterability during active material manufacturing, the lithium content is more preferably included in an amount of 0.9 ≤ a ≤ 1.1.

In the lithium metal oxide of Chemical Formula 1, nickel may be included in an amount corresponding to x, i.e., 0.5 ≤ x ≤ 0.7. If the nickel content is too low, achieving high capacity in the battery may be difficult; if the nickel content is too high, the structural stability of the active material may deteriorate, decreasing battery lifespan and thermal safety, and manufacturing costs may increase.

In the lithium metal oxide of Chemical Formula 1, cobalt may be included in an amount corresponding to y, i.e., 0 ≤ y ≤ 0.2 or 0.05 ≤ y ≤ 0.2. If the cobalt content is too low, it may be difficult to simultaneously achieve sufficient rate characteristics and high powder density of the active material. If the cobalt content is too high, the cost of raw materials increases overall and reversible capacity may decrease.

In the lithium metal oxide of Chemical Formula 1, manganese may be included in an amount corresponding to z, i.e., 0 ≤ z ≤ 0.4 or 0.1 ≤ z ≤ 0.4. If the manganese content is too low, manufacturing costs may increase and stability of the active material may decrease. If the manganese content is too high, capacity and output characteristics of the battery may deteriorate.

In the lithium metal oxide of Chemical Formula 1, M₁ and M₂ may each be included in amounts corresponding to w₁ and w₂, i.e., 0 < w < 0.03.

### <Method for Manufacturing the Positive Electrode Active Material for a Lithium Secondary Battery>

A method for manufacturing a positive electrode active material for a lithium secondary battery according to another embodiment of the present invention may include: preparing a transition metal precursor containing 50 to 70 mol% nickel based on the total moles of transition metals; mixing the transition metal precursor with a lithium raw material and performing calcination to obtain a lithium metal oxide; deagglomerating the lithium metal oxide to obtain a lithium metal oxide in a single-particle form; and mixing the lithium metal oxide in a single-particle form with a coating raw material and performing heat treatment to obtain a lithium metal oxide having a coating layer formed thereon.

Hereinafter, the method for manufacturing a positive electrode active material for a lithium secondary battery according to another embodiment of the present invention will be described in detail.

First, a transition metal precursor containing 50 to 70 mol% nickel based on the total moles of transition metals is prepared.

The transition metal precursor may be a transition metal hydroxide.

The transition metal hydroxide may be manufactured, for example, by adding a chelating-agent-containing solution and a pH-adjusting-agent-containing solution to a transition-metal-containing solution including a nickel raw material and optionally a cobalt raw material or a manganese raw material, followed by co-precipitation.

The nickel raw material is not particularly limited as long as it is used in the manufacture of precursors for positive electrode active materials. For example, the nickel raw material may include nickel-containing sulfates, acetates, nitrates, halides, sulfides, hydroxides, oxides, or oxyhydroxides, and specifically may include NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, nickel fatty acid salts, nickel halides, or combinations thereof, but is not limited thereto.

The cobalt raw material is not particularly limited as long as it is used in the manufacture of precursors for positive electrode active materials. For example, the cobalt raw material may include cobalt-containing sulfates, acetates, nitrates, halides, sulfides, hydroxides, oxides, or oxyhydroxides, and specifically may include CoSO₄, CoSO₄·7H₂O, Co(OH)₂, CoOOH, Co(OCOCH₃)₂·4H₂O, Co(NO₃)₂·6H₂O, or combinations thereof, but is not limited thereto.

The manganese raw material is also not particularly limited as long as it is used in the manufacture of precursors for positive electrode active materials. For example, the manganese raw material may include manganese-containing sulfates, acetates, nitrates, halides, sulfides, hydroxides, oxides, oxyhydroxides, or combinations thereof, and specifically may include manganese salts such as MnSO₄, MnCO₃, Mn(NO₃)₂, manganese acetate, manganese dicarboxylates, manganese citrate, manganese fatty acid salts; manganese oxides such as Mn₂O₃, MnO₂, and Mn₃O₄; manganese oxyhydroxides; manganese chlorides; or combinations thereof, but is not limited thereto.

The transition-metal-containing solution may be prepared by adding the nickel raw material and optionally the cobalt raw material or manganese raw material to a solvent, specifically water or a mixture of water and an organic solvent that is miscible with water (e.g., alcohols).

The chelating-agent-containing solution serves as a complexing agent and may include, for example, NH₃, NH₄OH, (NH₄)₂SO₄, NH₄NO₃, NH₄Cl, CH₃COONH₄, NH₄CO₃, or combinations thereof, but is not limited thereto. The chelating-agent-containing solution may be used in the form of an aqueous solution, where the solvent may be water or a mixture of water and an organic solvent miscible with water (e.g., alcohols).

The pH-adjusting-agent-containing solution serves as a precipitant or a pH-adjusting agent and may include alkaline metal or alkaline-earth metal hydroxides such as NaOH, KOH, or Ca(OH)₂, their hydrates, or combinations thereof. The pH-adjusting-agent-containing solution may also be used as an aqueous solution, and the solvent may be water or a mixture of water and a water-miscible organic solvent (e.g., alcohols). The pH-adjusting-agent-containing solution may be added in an amount sufficient to adjust the pH of the reaction solution to 11 to 13.

The co-precipitation reaction may be performed under an inert atmosphere such as nitrogen or argon, may be performed at a temperature of 30 to 70°C, and may be performed at a pH of 11 to 13.

Through the above process, particles of nickel-cobalt-manganese (and optionally dopant-element) hydroxides are generated and precipitated in the reaction solution. The precipitated precursor particles may be separated, washed, and dried by conventional methods to obtain the precursor. The precursor may be a secondary particle in which primary particles are agglomerated.

The concentrations of the nickel raw material, cobalt raw material, and manganese raw material may be adjusted to control the molar ratio of nickel, cobalt, and manganese in the precursor.

Accordingly, the nickel content in the transition metal precursor may be 50 to 70 mol% based on the total moles of transition metals. The technical significance of controlling the nickel content is as previously described.

Next, the transition metal precursor is mixed with a lithium raw material and calcined to obtain a lithium metal oxide. Specifically, primary calcination and secondary calcination may be performed to obtain the lithium metal oxide.

Conventionally, to form a lithium metal oxide in a single-particle form, only high-temperature long-term single-step calcination was performed, but in such cases, over-sintering occurs, leading to nickel cation mixing and formation of rocksalt impurity phases, thereby deteriorating the electrochemical characteristics of the active material. In contrast, the manufacturing method of the present invention divides calcination into two stages, which can prevent such issues, increase particle strength, and increase production yield.

The atmosphere during the primary calcination is not particularly limited. For example, the primary calcination may be performed in an air atmosphere or an oxygen atmosphere, but more specifically may be performed in an air atmosphere. High-nickel cathode materials generally require an oxygen atmosphere because air calcination results in poor formation of the layered crystal structure, significantly deteriorating electrochemical performance. However, in the present invention, because the nickel content is relatively lower, calcination in an air atmosphere does not significantly deteriorate electrochemical performance and may reduce process costs.

Particularly, the secondary calcination is performed in an air atmosphere. The primary calcination and secondary calcination may independently be performed at temperatures of 900 to 960°C. If the calcination temperature is too low, a single-particle form of lithium metal oxide may not be sufficiently formed. If the calcination temperature is too high, over-sintering may occur, deteriorating electrochemical characteristics such as capacity.

The primary calcination may be performed for 2 to 6 hours. If the primary calcination time is too short, lithium ions may not be fully inserted into the precursor, and if it is too long, over-sintering may cause difficulty in deagglomeration, lowering productivity.

The secondary calcination may be performed for 7 to 14 hours. If the secondary calcination time is too short, the formation of the single-particle morphology is insufficient, and insufficient annealing time for forming a stable layered structure may result in inferior electrochemical performance. If the secondary calcination time is too long, capacity reduction may occur due to over-sintering.

When the secondary calcination is performed within the above temperature and time ranges, it is advantageous because the crystal structure of the positive electrode active material can be stabilized. In addition, residual lithium by-products on the surface of the metal oxide decompose due to heat and diffuse into the metal oxide, decreasing surface residual lithium, and the lithium ions react with the metal oxide surface to form a stable layered structure. As a result, the surface structure of the metal oxide is stabilized, improving resistance and lifespan characteristics of the battery.

The method for manufacturing the positive electrode active material for a lithium secondary battery according to the present invention includes a step of deagglomerating the lithium metal oxide to obtain the lithium metal oxide in a single-particle form.

The deagglomeration may be performed after cooling the calcined lithium metal oxide to 50 to 200°C. Cooling to this temperature suppresses reactions between external moisture and the calcined material and suppresses an increase in residual lithium.

The deagglomeration may be performed by conventional methods known in the art.

For example, the deagglomeration may be performed using equipment such as a rotor mill, jet mill, ball mill, pin mill, bead mill, or roll mill, but is not limited thereto.

The method for manufacturing a positive electrode active material for a lithium secondary battery according to another embodiment of the present invention includes mixing the obtained lithium metal oxide with a coating raw material and performing heat treatment to form a coating layer.

The step of mixing the lithium metal oxide with the coating raw material and performing heat treatment to form a coating layer may specifically utilize a coating raw material including two or more selected from Al, W, Co, V, Ti, Nb, Ce, B, and P. The coating raw material may include two or more coating raw materials each including different coating elements. More specifically, it may be a coating raw material including Al and W, and even more specifically, it may be a mixture of an Al-containing coating raw material and a W-containing coating raw material. The coating raw material is not particularly limited as long as it can form the coating layer intended in the present invention.

The coating raw material may be mixed in an amount and ratio suitable for the positive electrode active material intended in the present invention, and since the content and ratio of the coating elements have already been specifically described above, further explanation is omitted here.

The step of mixing the lithium metal oxide with the coating raw material and performing heat treatment to form a coating layer may be performed at a temperature of 350 to 450°C and may be performed for 1 to 12 hours, but is not limited thereto.

When the coating layer is formed within the above heat treatment temperature range, the coating layer can be stably formed, and side reactions caused by surface residual lithium can be controlled, thereby achieving excellent discharge capacity and high-temperature lifespan.

After forming the coating layer, the method may further include a step of deagglomeration.

The deagglomeration may be performed in the same manner as described above.

Using the method for manufacturing a positive electrode active material for a lithium secondary battery according to another embodiment of the present invention, the positive electrode active material described above may be manufactured.

Detailed descriptions of the manufactured positive electrode active material have already been provided above and are therefore omitted here.

### <Positive Electrode>

In another embodiment of the present invention, a positive electrode is provided that includes a current collector and a positive electrode active material layer disposed on at least one surface of the current collector, the positive electrode active material layer including the aforementioned positive electrode active material.

The characteristics of the positive electrode active material constituting the positive electrode active material layer are the same as described above. Therefore, detailed descriptions pertaining to the positive electrode active material will be omitted.

The current collector may include, for example, stainless steel, aluminum, nickel, titanium, sintered carbon, or aluminum or stainless steel whose surface is surface-treated with carbon, nickel, titanium, silver, or the like.

Meanwhile, the positive electrode active material layer may include a binder and a conductive material.

The binder improves adhesion between the positive electrode active material particles and adhesion between the positive electrode active material and the current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof; and one or more of these may be used, but the binder is not limited thereto. The binder may be included in an amount of 1 to 30 wt% based on the total weight of the positive electrode active material layer.

The conductive material is used to impart electrical conductivity to the electrode and is not particularly limited as long as it has electronic conductivity without causing chemical changes in the battery. Specific examples include graphites such as natural graphite or artificial graphite; carbon-based materials such as carbon black, acetylene black, ketjen black, channel black, furnace black, lamp black, thermal black, or carbon fibers; metal powders or metal fibers such as copper, nickel, aluminum, or silver; conductive whiskers such as zinc oxide or potassium titanate; conductive metal oxides such as titanium oxide; or conductive polymers such as polyphenylene derivatives; and one or more of these may be used. The conductive material may typically be included in an amount of 1 to 30 wt% based on the total weight of the positive electrode active material layer.

The positive electrode may be manufactured according to a conventional method for manufacturing a positive electrode, except for using the aforementioned positive electrode active material.

Specifically, the positive electrode may be manufactured by applying a composition for forming a positive electrode active material layer-comprising the aforementioned positive electrode active material and, if necessary, a binder, conductive material, and solvent-onto the positive electrode current collector, followed by drying and rolling. At this time, the types and contents of the positive electrode active material, binder, and conductive material are as described above.

The solvent may be a solvent commonly used in the art, and examples include dimethyl sulfoxide (DMSO), isopropyl alcohol, N-methylpyrrolidone (NMP), acetone, or water, and one or more of these may be used. The amount of the solvent used only needs to be sufficient to dissolve or disperse the positive electrode active material, conductive material, and binder considering the coating thickness of the slurry and manufacturing yield, and to impart a viscosity that allows excellent thickness uniformity during coating for electrode fabrication.

Alternatively, the positive electrode may be manufactured by casting the composition for forming the positive electrode active material layer onto a separate support, peeling the film obtained therefrom, and laminating the film onto the current collector.

The present invention does not limit the structure or manufacturing method of the positive electrode.

### <Lithium Secondary Battery>

In another embodiment of the present invention, a lithium secondary battery including the positive electrode described above is provided.

The lithium secondary battery may specifically include a positive electrode, a negative electrode positioned opposite the positive electrode, a separator interposed between the positive electrode and the negative electrode, and an electrolyte, and the positive electrode is as described previously. In addition, the lithium secondary battery may optionally further include a battery case housing an electrode assembly including the positive electrode, the negative electrode, and the separator, and a sealing member sealing the battery case.

In the lithium secondary battery, the negative electrode may include a negative electrode current collector and a negative electrode active material layer disposed on the negative electrode current collector.

The negative electrode current collector is not particularly limited as long as it has high electrical conductivity and does not cause chemical changes in the battery. Examples include copper, stainless steel, aluminum, nickel, titanium, sintered carbon, copper or stainless steel whose surfaces are surface-treated with carbon, nickel, titanium, or silver, aluminum-cadmium alloys, and the like. The negative electrode current collector may typically have a thickness of 3 to 500 µm, and similar to the positive electrode current collector, fine irregularities may be formed on its surface to enhance the adhesion of the negative electrode active material. For example, the negative electrode current collector may be used in various forms such as films, sheets, foils, nets, porous bodies, foams, or nonwoven fabrics.

The negative electrode active material layer may optionally include a binder and a conductive material along with the negative electrode active material. For example, the negative electrode active material layer may be manufactured by coating a composition for forming a negative electrode active material layer-including the negative electrode active material and optionally a binder and a conductive material-on the negative electrode current collector, followed by drying. Alternatively, the negative electrode active material layer may be manufactured by casting the composition for forming the negative electrode active material layer onto a separate support, peeling a film obtained therefrom, and laminating the film onto the negative electrode current collector.

The negative electrode active material may be a compound capable of reversibly intercalating and deintercalating lithium. Specific examples include carbon-based materials such as artificial graphite, natural graphite, graphitized carbon fibers, and amorphous carbon; metal-based compounds capable of alloying with lithium such as Si, Al, Sn, Pb, Zn, Bi, In, Mg, Ga, Cd, silicon alloys, tin alloys, or aluminum alloys; metal oxides capable of doping and dedoping lithium such as SiOβ (0 ≤ β < 2), SnO₂, vanadium oxides, and lithium vanadium oxides; and composites including the metal-based compounds and carbon-based materials such as Si-C composites or Sn-C composites. One or two or more of these may be used. In addition, a thin metal lithium film may also be used as the negative electrode active material. Carbon materials may include both low-crystallinity carbon and high-crystallinity carbon. Representative low-crystallinity carbons include soft carbon and hard carbon. Representative high-crystallinity carbons include amorphous, plate-shaped, flake-shaped, spherical, or fibrous natural graphite or artificial graphite, Kish graphite, pyrolytic carbon, mesophase pitch-based carbon fiber, mesocarbon microbeads, mesophase pitches, and petroleum or coal tar pitch-derived cokes.

The binder and conductive material may be the same as those described above for the positive electrode.

Next, depending on the type of the lithium secondary battery, a separator may be disposed between the positive electrode and the negative electrode. Examples of such separators include polyethylene, polypropylene, polyvinylidene fluoride, or multilayer films comprising two or more layers thereof. Mixed multilayer separators may also be used, such as polyethylene/polypropylene two-layer separators, polyethylene/polypropylene/polyethylene three-layer separators, or polypropylene/polyethylene/polypropylene three-layer separators.

In the lithium secondary battery, the electrolyte may include organic liquid electrolytes, inorganic liquid electrolytes, solid polymer electrolytes, gel-type polymer electrolytes, solid inorganic electrolytes, or molten inorganic electrolytes usable in lithium secondary batteries, but is not limited thereto.

Specifically, the organic liquid electrolyte may include an organic solvent and a lithium salt.

The organic solvent is not particularly limited as long as it can serve as a medium through which ions involved in the battery's electrochemical reaction can move. Specific examples of the organic solvent include ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethanol or isopropyl alcohol; nitriles such as R-CN (where R is a C₂-C₂₀ straight-chain, branched, or cyclic hydrocarbon group, and may include a double bond, aromatic ring, or ether linkage); amides such as dimethylformamide; dioxolanes such as 1,3-dioxolane; or sulfolanes. Among these, carbonate-based solvents are preferred. More preferably, a mixture of cyclic carbonates having high ionic conductivity and high dielectric constant (e.g., ethylene carbonate or propylene carbonate) and linear carbonates having low viscosity (e.g., ethylmethyl carbonate, dimethyl carbonate, or diethyl carbonate) is used. In this case, the cyclic carbonate and linear carbonate may be mixed at a volume ratio of about 1:1 to about 1:9 to exhibit excellent electrolyte performance.

The lithium salt may be any compound capable of providing lithium ions used in lithium secondary batteries. Specific examples include LiPF₆, LiClO₄, LiAsF₆, LiBF₄, LiSbF₆, LiAlO₄, LiAlCl₄, LiCF₃SO₃, LiC₄F₉SO₃, LiN(C₂F₃SO₃)₂, LiN(C₂F₅SO₂)₂, LiN(CF₃SO₂)₂, LiCl, LiI, or LiB(C₂O₄)₂. The concentration of the lithium salt is preferably within the range of 0.1 to 2.0 M. When the lithium salt concentration is within this range, the electrolyte may exhibit excellent performance with appropriate conductivity and viscosity, and lithium ions may effectively move.

The structure and manufacturing method of the battery according to the present invention are not limited.

As described above, the lithium secondary battery including the positive electrode active material of the present invention exhibits excellent discharge capacity, output characteristics, and capacity retention, making it useful for portable devices such as mobile phones, laptop computers, and digital cameras, as well as electric vehicle applications such as hybrid electric vehicles (HEVs).

### [Best Mode for Carrying Out the Invention]

Preferred embodiments and comparative examples of the present invention are described below. However, the following embodiments merely represent preferred embodiments of the present invention, and the present invention is not limited thereto.

### Example 1

### (Manufacture of Positive Electrode Active Material)

**(Mixing)** A precursor having a composition of Ni_{0.6}Co_{0.1}Mn_{0.3}(OH)₂ and Li₂CO₃ were mechanically mixed in a mixer to prepare a mixture such that the molar ratio (Li/M) of lithium to the transition metal in the precursor was 1.07.

**(Calcination and Deagglomeration)** Thereafter, the mixture was heated to 940°C in an air atmosphere, maintained at 940°C for 4 hours to perform primary calcination, and then naturally cooled.

The primary calcined material was then deagglomerated using a rotor mill.

Next, the deagglomerated primary calcined material was subjected to secondary calcination at 940°C for 10 hours under an air atmosphere, followed by natural cooling, thereby forming a lithium metal oxide.

The lithium metal oxide was further deagglomerated using a jet mill to obtain a lithium metal oxide in a single-particle form.

The composition of the finally obtained lithium metal oxide in a single-particle form was Li_{1.07}Ni_{0.6}Co_{0.1}Mn_{0.3}O₂.

**(Coating)** Al(OH)₃ (or Al₂O₃) and WO₃ were uniformly mixed with the lithium metal oxide in a single-particle form in proportions corresponding to the Al and W equivalent ratios shown in Table 1 for Example 1.

The mixture was placed in a crucible and heat-treated at 400°C for 6 hours in an RHK furnace into which oxygen was supplied, thereby forming a positive electrode active material coated with Al and W. Thereafter, the coated powder was deagglomerated using an ACM to produce the positive electrode active material in a single-particle form having an Al/W coating layer.

### (Fabrication of Lithium Secondary Battery)

The slurry for manufacturing the electrode plate was prepared by mixing the obtained positive electrode active material : conductive material (carbon black, Denka Black) : binder (PVDF, KF9700) in a ratio of 95.0 : 2.0 : 3.0 wt%.

NMP (N-methyl-2-pyrrolidone) was added to adjust the viscosity such that the solid content became approximately 60%.

The prepared slurry was coated onto a 20 µm-thick Al foil using a doctor blade and then dried and rolled. The electrode loading amount was 16.0 mg/cm², and the rolling density (25°C, 20 kN) was 3.5 g/cm³.

The electrolyte was a solution of 1 M LiPF₆ in EC:DMC:DEC = 1:2:1 (vol%), to which 2.0 vol% of VC was added. A coin cell was fabricated using a PP separator and a lithium negative electrode (400 µm, Niba metal).

### (2) Comparative Examples 1 to 4

Positive electrode active materials and coin cells were manufactured in the same manner as in Example 1, except that the coating element contents were adjusted as shown in Table 1 below.

### Experimental Example 1: SEM Images of the Positive Electrode Active Material

SEM images of the positive electrode active materials prepared according to the examples and comparative examples were observed and are shown in FIGS. 1 to 5.

Referring to FIGS. 1 to 5, it was confirmed that the positive electrode active materials of both the examples and comparative examples had a single-particle morphology.

### Experimental Example 2: Equivalence Point (EP) of Positive Electrode Active Material

The titration equivalence point (EP) of the positive electrode active materials prepared according to the examples and comparative examples was determined from the differential curve (dpH/Dv).

Specifically, potentiometric titration was performed using equipment from Mettler Toledo. A 0.1 M HCl aqueous solution was added dropwise at a rate of 0.05 mL/sec until the added volume reached 15 mL.

The differential curve (dpH/dV, where V is the volume of the 0.1 M HCl solution) was used to determine the equivalence point (EP) of the positive electrode active material according to the present invention.

Table 1 below summarizes the coating element contents and equivalence points for the examples and comparative examples.

**[Table 1]**

| | Coating element | | | Equivalence Point (EP) | | | |
|---|---|---|---|---|---|---|---|
| | Al (ppm) | W ppm) | W/Al | Initial pH | 1st peak pH | 2nd peak pH | 3rd peak pH |
| Comparative Example 1 | 1400 | 3 | - | 11.5 | 8.9 | - | 5.7 |
| Comparative Example 2 | 1400 | 2800 | 2.0 | 11.4 | 9.7 | 7.4 | 5.1 |
| Comparative Example 3 | 1400 | 1200 | 3.0 | 11.4 | 9.8 | 7.6 | 1.8 |
| Comparative Example 4 | 0 | 2800 | - | 11.6 | 9.0 | 7.2 | 5.1 |
| Example 1 | 1400 | 1400 | 1.0 | 11.7 | 9.7 | - | 5.5 |

Referring to Table 1, in the case of Example 1, Al and W were each included as coating elements in an amount of 1,400 ppm, the content ratio (W/Al) of W to Al was 1, and it was confirmed that no second peak (titration equivalence point) occurred within the pH range of 6.5 to 9.0. In contrast, it was confirmed that Comparative Examples 2 to 4 exhibited a second peak (titration equivalence point) within the pH range of 6.5 to 9.0.

### Experimental Example 3: Coin Cell Fabrication and Capacity Evaluation (Initial Capacity and Initial Efficiency Evaluation)

A lithium secondary battery half-cell was fabricated, aged at 25°C for 12 hours, and subjected to charge/discharge testing at 25°C. For initial capacity evaluation, the reference capacity was set to 200 mAh/g.

Charging was performed at a constant current of 0.1 C to 4.4 V, followed by constant-voltage charging until the termination current reached 0.05 C. After charging, a rest time of 10 minutes was applied, and discharging was performed at a constant current of 0.1 C to 2.5 V based on a reference capacity of 200 mAh/g.

### (High-Temperature Lifespan Characteristics (High-Temperature Capacity Retention) Evaluation: 45°C, 50 cycles)

A lithium secondary battery half-cell was fabricated and charged at 45°C at a constant current of 0.5 C to 4.4 V, followed by constant-voltage charging until the termination current reached 0.05 C. After charging, a rest time of 10 minutes was applied, and discharging was performed at a constant current of 1.0 C to 2.5 V. Fifty charge/discharge cycles were performed under these charge/discharge conditions, and the capacity retention was calculated as the ratio of the 50th cycle discharge capacity to the first cycle discharge capacity.

**[Table 2]**

| | 0.1C/0.1C Initial Cycle Discharge (mAh/g) | High temp.(45°C) test, (Retention @50^{Ih}) |
|---|---|---|
| Comparative Example 1 | 194.5 | 95.70% |
| Comparative Example 2 | 195.7 | 94.80% |
| Comparative Example 3 | 195.2 | 94.80% |
| Comparative Example 4 | 195.6 | 94.30% |
| Example 1 | 195.3 | 95.54% |

Referring to Table 2, when the positive electrode active material for a lithium secondary battery according to Example 1-satisfying the conditions of the present invention such as the contents and ratios of the coating elements-was used, it was confirmed that both the initial discharge capacity and the high-temperature lifespan characteristics were excellent.

In contrast, Comparative Examples 1 to 4, in which the contents and ratios of the coating elements were outside the scope of the present invention, exhibited inferior initial discharge capacity or high-temperature lifespan characteristics compared to Example 1.

The present invention is not limited to the above-described embodiments, and various modifications and variations may be made without departing from the spirit or essential characteristics of the invention. It will be understood by those skilled in the art that the invention may be practiced in other specific forms without departing from the essential technical spirit or characteristics of the present invention. Therefore, the embodiments described above are to be understood as illustrative in all respects and not as limiting.

## Claims

1. A positive electrode active material for a lithium secondary battery, comprising:
a lithium metal oxide in a single-particle form; and
a coating layer located on a surface of the lithium metal oxide,
wherein the coating layer comprises Al and W.

2. The positive electrode active material of claim 1, wherein a content ratio (W/Al) of W to Al is 1.5 or less, excluding 0.

3. The positive electrode active material of claim 2, wherein the content ratio (W/Al) of W to Al is 1.0 or less, excluding 0.

4. The positive electrode active material of claim 1, wherein contents of each coating element included in the coating layer are 2,000 ppm or less, excluding 0 ppm.

5. The positive electrode active material of claim 4, wherein contents of each coating element included in the coating layer are 1,500 ppm or less, excluding 0 ppm.

6. The positive electrode active material of claim 1, wherein the lithium metal oxide does not exhibit a titration equivalence point within a pH range of 6.5 to 9.0 when neutralization titration is detected using a potentiometric titrator.

7. The positive electrode active material of claim 1, wherein the lithium metal oxide comprises 50 to 70 mol% nickel based on the total moles of transition metals.

8. A method for manufacturing a positive electrode active material for a lithium secondary battery, comprising:
preparing a transition metal precursor comprising 50 to 70 mol% nickel based on the total moles of transition metals;
mixing the transition metal precursor with a lithium raw material and performing calcination to obtain a lithium metal oxide;
deagglomerating the lithium metal oxide to obtain a lithium metal oxide in a single-particle form; and
mixing the lithium metal oxide in a single-particle form with a coating raw material, followed by heat treatment to obtain a lithium metal oxide having a coating layer formed thereon,
wherein the coating raw material comprises two or more selected from Al, W, Co, V, Ti, Nb, Ce, B, and P.

9. The method for manufacturing a positive electrode active material of claim 8, wherein, in the step of mixing the lithium metal oxide in a single-particle form with the coating raw material and performing heat treatment to obtain the lithium metal oxide having the coating layer formed thereon, the heat treatment is performed at a temperature of 350 to 450°C.

10. The method for manufacturing a positive electrode active material of claim 8, wherein, in the step of mixing the transition metal precursor with the lithium raw material and performing calcination to obtain the lithium metal oxide, the calcination is performed at a temperature of 900 to 960°C.

11. The method for manufacturing a positive electrode active material of claim 8, further comprising deagglomerating the obtained lithium metal oxide after the step of mixing the lithium metal oxide in a single-particle form with the coating raw material and performing heat treatment to form the coating layer.

12. A positive electrode for a lithium secondary battery, comprising the positive electrode active material according to any one of claims 1 to 7.

13. A lithium secondary battery comprising the positive electrode of claim 12.
